# EUROPEAN PATENT APPLICATION

(11) **EP 2 017 115 A1**
(43) Date of publication of application: **21.01.2009**
(21) Application number: 08160184.1
(22) Date of filing: 11.07.2008
(51) Int. Cl.: B60K 17/28

(54) **Power takeoff for motor vehicles**

(30) Priority: 19.07.2007 IT BO20070498
(71) Applicant: Interpump Hydraulics S.p.A., 41015 Nonantola (MO) (IT)
(72) Inventor: Prampolini, Silvano, 41030, BOMPORTO (MO) (IT); Munerati, Luca, 44012, BONDENO (FERRARA) (IT)
(74) Representative: Dall'Olio, Giancarlo

(57) **Abstract**

Power takeoff for motor vehicles comprising a gearwheel (8) at an inlet (2) for receiving at least a portion of the mechanical power generated by the motor of a motor vehicle; a first gearwheel (10) dragged by the gearwheel (8), keyed on a first actuation shaft (11) arranged at a first outlet (4); a second gearwheel (12) dragged by the first gearwheel (10), keyed on a second actuation shaft (13) arranged at a second outlet (5), the gear ratios defined between said first outlet (4) and the driving shaft and between the second outlet (5) and the driving shaft being greater than one.

## Description

The present invention relates to the technical field of power takeoffs mounted on motors of motor vehicles for industrial applications.

As it is known, power takeoffs are mechanical devices generally mounted on lorries or the like (for example: packer trucks, concrete mixers, dumpers etc...), which take an aliquot of the mechanical power supplied by the transmission shaft to activate actuator means, such as hydraulic pumps and compressors, in different industrial applications; each power takeoff substantially comprises: gears transmitting motion from an inlet, in which by means of a removable coupling (for example operated by a mechanical or pneumatic control) power is taken from the transmission shaft of the motor vehicle, to one or two outlets according to different gear ratios, where are provided torques to operate actuator means; and a mechanical or pneumatic device to control engaging and disengaging of the power takeoff from the transmission shaft.

A power takeoff of known kind is provided with the inlet on the frontal side while on the rear one it is provided with one or at the most two outlets; the first one being characterized by a gear ratio PTO/motor tending to one to move for example hydraulic pumps, the second one (so called "fast outlet"), if any, having a gear ratio greater than one to actuate for example compressors.

Motor vehicles, which generally provide the coupling to a power takeoff in the gearcase, can have the corresponding connecting shaft (for example the transmission shaft) rotating in one direction or in the other; therefore, at the outlets of the power takeoff are provided corresponding mechanical torques acting according to the rotation direction of the connecting shaft. Some actuator means require an actuation torque acting in a determined rotation direction, therefore during the mounting phase, it is needed to have two different kinds of power takeoff at one's disposal, according to the kind of the gearbox on which these have to be mounted; this problem particularly arises when it is needed to connect the fast outlet of the power takeoff to a compressor, which can be exactly actuated only in one determined rotation direction.

In some kinds of power takeoffs, those skilled in the art have tried to solve this problem by making the fast outlet, yet provided on the rear side, accessible also on the frontal side (where the inlet is provided), taking into account every resulting problem for providing the mechanical connection of such an outlet to the actuator means to actuate.

Therefore, an object of the present invention is to provide a power takeoff which is new and easily conceived and can be mounted on any kind of motor of motor vehicles and which is able to supply actuator means requiring an actuation torque acting in a rotation direction or in the other, satisfactorily obviating to the above-described disadvantages pertaining to the known solutions.

Another object of the present invention is to provide a power takeoff for motor vehicles which is little dimensioned, reliable, functional, and whose costs are relatively reduced with respect to the advantages intended to pursue.

Said objects are attained by means of a power takeoff for motor vehicles comprising a shaft at an inlet for receiving at least a portion of the mechanical power generated by the driving shaft of a mentioned motor vehicle and at least an outlet for transmitting a respective torque to actuate an actuator means, characterized in that it comprises: a gearwheel moved by said shaft, the gearwheel receiving said at least one portion of said mechanical power; a first gearwheel rotationally dragged by said gearwheel for transmitting a first actuation torque to a first actuation shaft at a first outlet; a second gearwheel rotationally dragged by said first gearwheel for transmitting a second actuation torque to a second actuation shaft at a second outlet, the gear ratio defined by the ratio between the angular speed of said first actuation shaft and the angular speed of said driving shaft and the gear ratio defined by the ratio between the angular speed of said second actuation shaft and the angular speed of said driving shaft being both greater than one, so as to define said first and second outlet as corresponding first fast outlet and second fast outlet.

The features of the invention, not emerging from the preceding description, will be better highlighted in the following, according to the claims and by means of the appended drawings, in which:

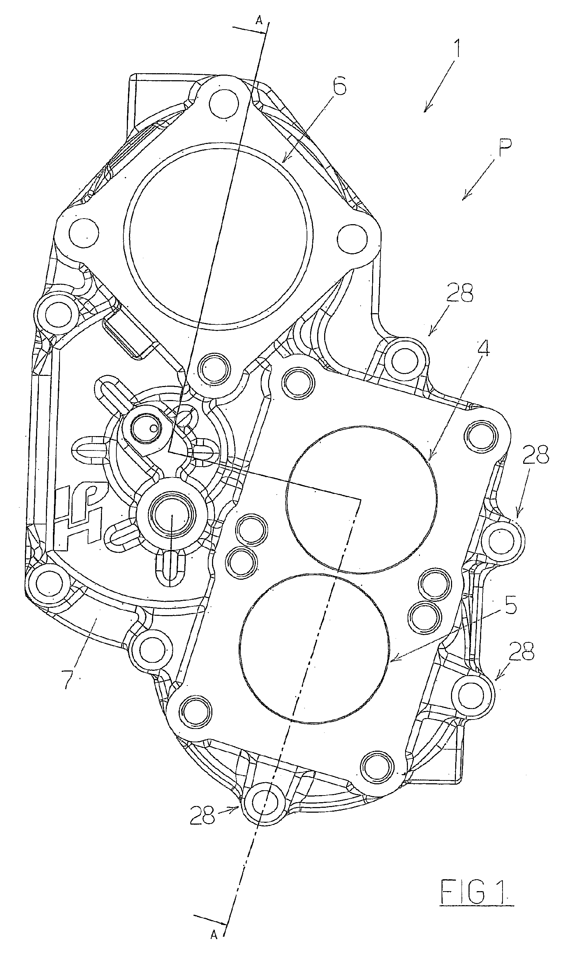

- figure 1 is a frontal view of a power takeoff for motor vehicles according to the present invention;

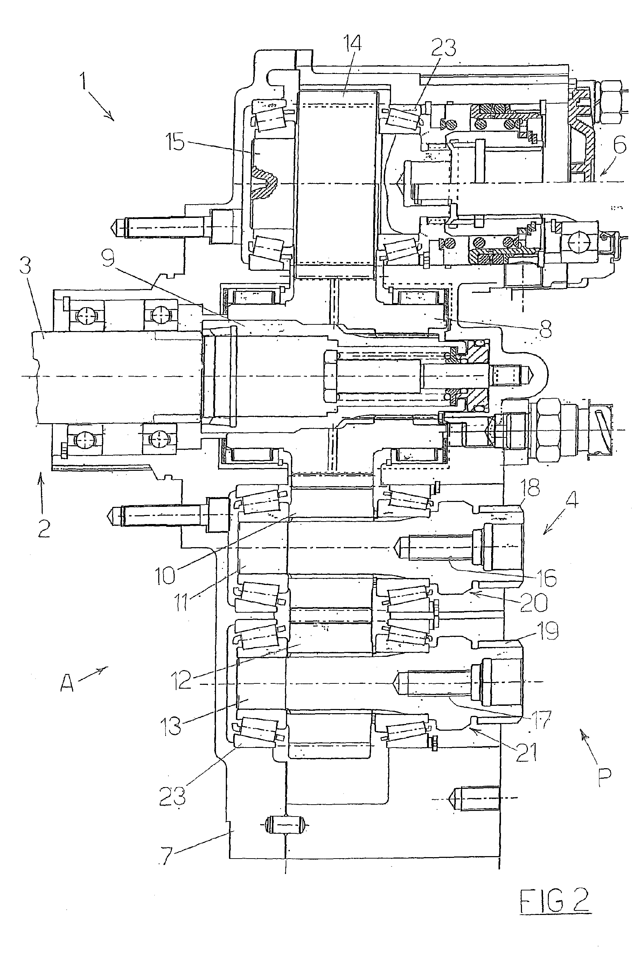

- figure 2 shows the view according to section A-A of fig. 1, in enlarged scale;
- figures 3A, 3B show an enlarged detail of the previous figure, a flange, associated to a not shown actuator, being coupled to the two fast outlets of the power takeoff, respectively;
- figures 4A, 4B show an enlarged detail of figure 2, in two cases wherein a disengaging assembly, associated to a not shown actuator means, is coupled to the two fast outlets of the power takeoff, respectively.

Referring to the appended drawings, the reference number 1 generally indicates a power takeoff according to the invention, which, at its frontal side A is provided with an inlet 2 for receiving a portion of the mechanical power generated by the motor (not shown as not pertaining to the invention) of a motor vehicle, such as a lorry, for example by means of its transmission shaft 3; while at the rear side P it is provided with a first and second "fast" outlet 4, 5 having a limited distance between axles, as well as a third outlet 6.

The power takeoff 1 particularly comprises: a casing 7; a gearwheel 8 keyed on a sleeve 9 engaging the transmission shaft 3; a first gearwheel 10 meshing with the gearwheel 8, keyed on a first actuation shaft 11 arranged at the first outlet 4; a second gearwheel 12 meshing in turn with the first gearwheel 10 and identical to this one, keyed on a second actuation shaft 13 arranged at the second outlet 5; and a third gearwheel 14 meshing with the gearwheel 8, keyed on a third actuation shaft 15 arranged in turn at the third outlet 6.

The gear ratio defined by the ratio between the angular speed of the first actuation shaft 11 (at the first outlet 4) and the angular speed of the driving shaft (at the inlet 2) and the gear ratio defined by the ratio between the angular speed of the second actuation shaft 13 (at the second outlet 5) and the angular speed of the driving shaft are the same and greater than one (for example between 1,1 and 2,1); while the gear ratio defined by the ratio between the angular speed of the third actuation shaft 15 (at the third outlet 6) and the angular speed of the driving shaft tends for example to one.

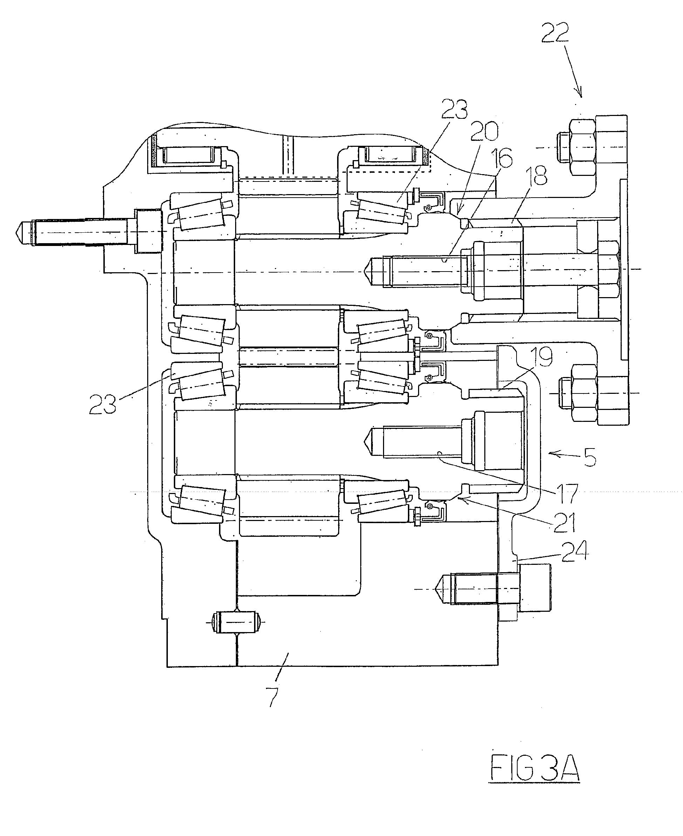

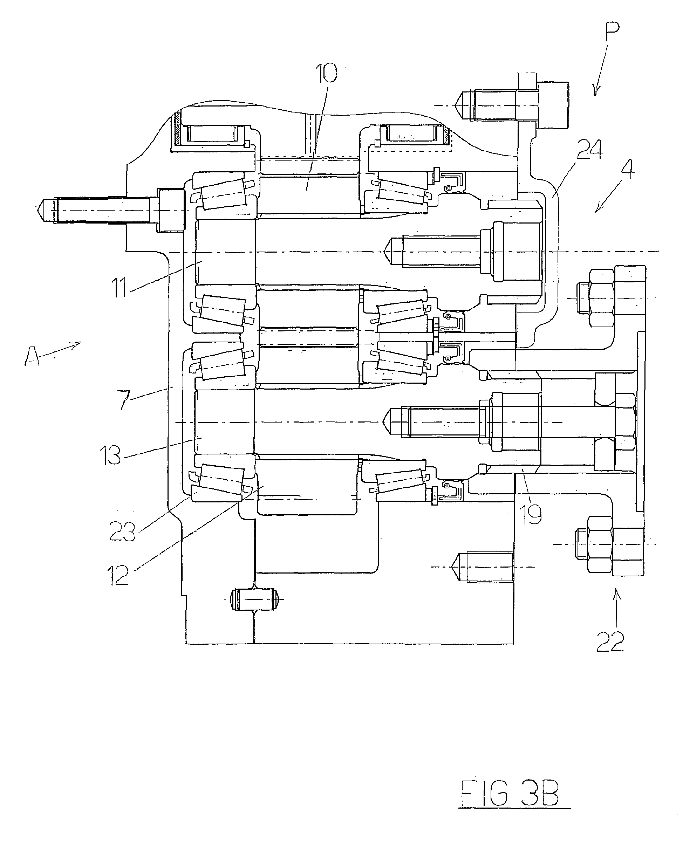

On their respective free end (at the first and second outlet 4, 5, respectively), the first and the second actuation shaft 11, 13 are provided with: an axial threaded hole 16, 17; a shaft spline 18, 19 extending in circumpherential sense and of determined longitudinal extension; and more internally with respect to the shaft spline, the shafts 11, 13 form together a conical centering element 20, 21. The conical centering element 20, 21 advantageously allows to reduce the longitudinal extension of the shaft spline 18, 19, however assuring the stable coupling for example of the power takeoff 1 to the flange 22 of a not shown actuator means (see figures 3A, 3B); therefore the centering conical element 20, 21 has a stabilizing and centering effect for the coupling. So, at the same time between said flange 22 and the first or second actuation shaft 11, 13 will be provided a threaded, conical and grooved coupling.

The inventive power takeoff 1 is for example subjected to a pneumatic or mechanical control in a known way concerning its engaging and disengaging to and from the transmission shaft (not shown as previously stated).

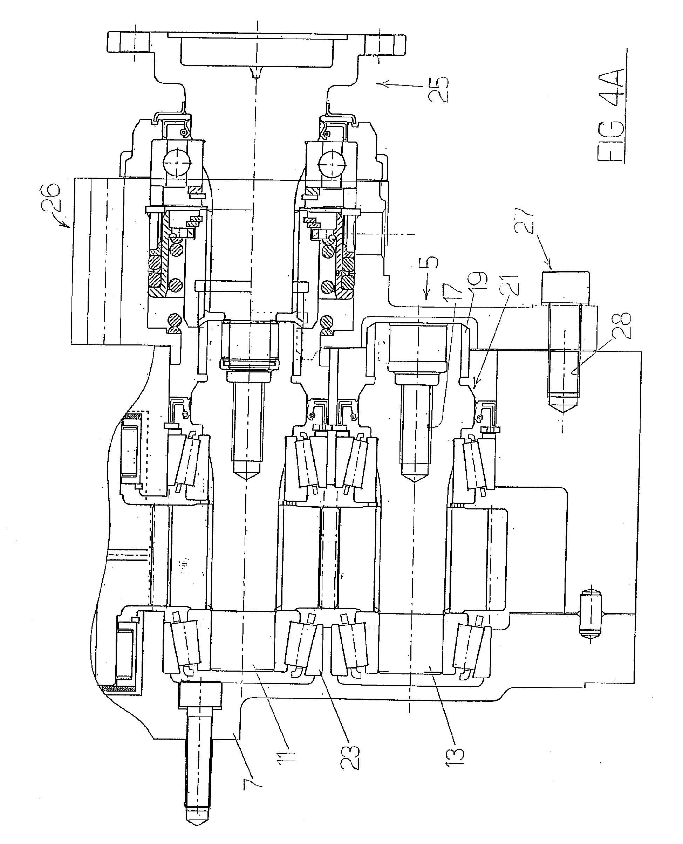

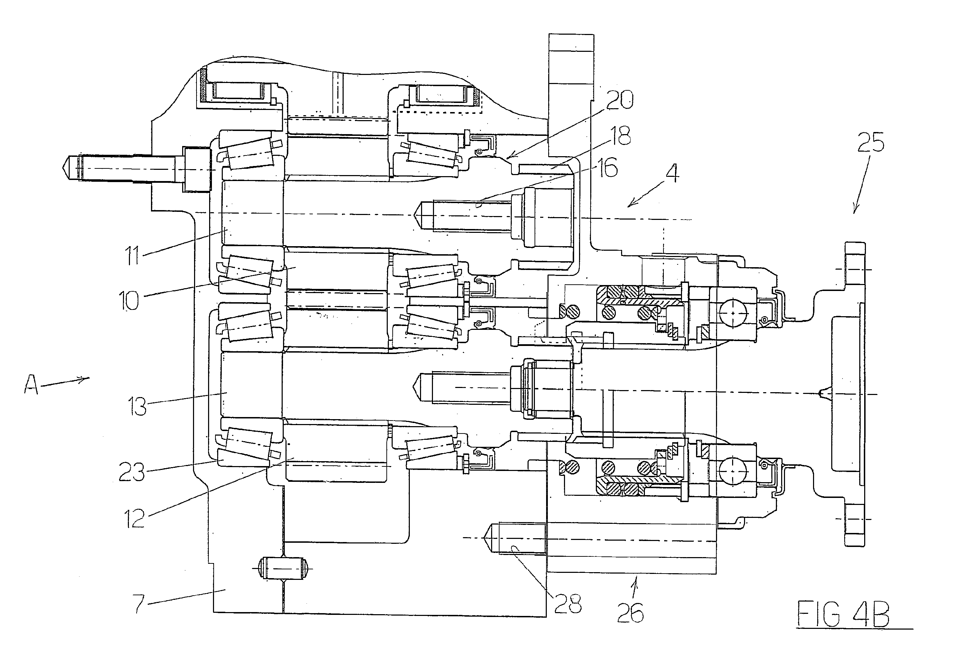

The reference number 26 indicates a support structure provided with a disengaging assembly 25, of known kind, which couples to the first or second actuation shaft 11, 13 of the first or second outlet 4, 5 of the power takeoff 1 to provide the functional connection of the latter to an actuator means. The support structure 26 is designed to removably couple to the casing 7, for example by means of screws 27, in order to guarantee the stable coupling of the disengaging assembly 25 to the first or second actuation shaft 11, 13; said support structure 26 is moreover designed to close the unused fast outlet of the power takeoff 1 (see figures 4A, 4B).

The support structure 26 has advantageously been designed to facilitate its uncoupling and coupling to the casing 7, when it is needed to connect the disengaging assembly 25 from the first to the second actuation shaft 11, 13 or vice versa: in this case, in fact, it suffices to unscrew the screws 27, to arrange the support structure 26-disengaging assembly 25 unit at the desired fast outlet, to rotate it of 180° degrees with respect to the axis of the same disengaging assembly 25 and then to screw the screws 27 inside the threaded seats 28 suitably provided in the casing 7 to clamp the unit to the casing 7.

According to what is claimed, the support structure 26 and the disengaging assembly 25 form an interface for the functional connection of the power takeoff 1 to an actuator means.

Taper roller bearings 23 supporting the mechanical moving parts and the suitable spatial arrangement of the elements making up the inventive power takeoff 1 allow to significantly contain dimensions and to define a particularly limited distance between axles between the first and second outlet 4, 5, in addition to every resulting advantageous functional aspect; in this case, the reduced distance between axles and the presence of the fast outlets on the same side of the power takeoff help the operator (installer or user) to connect actuator means to one or the other of these outlets 4, 5, or, once the functional connection of an actuator means to for example the first fast outlet 4 has been provided, to modify such connection taking it on the second fast outlet 5 and vice versa.

The actuation shafts 11, 13 of the two fast outlets 4, 5 are counter-rotating, are close to each other and accessible from the same rear side P; this is particularly advantageous because to the one or the other of such shafts 11, 13, regardless of the kind of motor on which the power takeoff 1 is mounted, it is possible to couple those actuator means which require a determined rotation direction of the same actuation shaft 11, 13, to be actuated; referring by way of example to figures 3A, 3B, it is in fact possible to easily couple the flange 22, for example constrained to the dragging shaft (not shown) of a compressor, to the first and the second actuation shaft 11, 13, respectively, of the first and second outlet 4, 5, according to the rotation direction that they take, once the power takeoff 1 has been mounted on the gearbox of the motor vehicle. The cover 24, shown in the figures 3A, 3B, is from time to time removably fixed to the casing 7 in order to close the unused fast outlet 4, 5.

According to the preceding description, the advantage of the present invention is to provide a new power takeoff for motor vehicles, which brilliantly solves the disadvantages pertaining to the known solutions and which fully satisfies the prefixed objects; the presence of a slow outlet and of two fast outlets on the same rear side, these two outlets having counter-rotating shaft with limited distance between axles, allows to mount the inventive power takeoff on any motor-gearbox unit and to couple it also to actuator means, such compressors requiring a specific rotation direction of the shaft to be actuated; therefore, it is possible to satisfactorily meet any application need of the field, advantageously by means of a single power takeoff according to the invention.

Another advantage of the present invention is to provide a limited dimensioned power takeoff for motor vehicles, even considering the presence of two fast outlets and of a slow one; the power takeoff being reliable, functional and such that it can be easily coupled to actuators also by means of ordinary means and by not skilled personnel, for example by the user too.

Another advantage of the invention is to provide a power takeoff, whose costs are relatively contained with respect to the advantages attained.

It is to be precised that alternatively the inventive power take off can be provided without the third outlet 6, providing therefore only the two fast outlets 4,5.

Moreover, it is to be précised that the first gearwheel 10 can also be different from the second gearwheel 12, whereby the gear ratio defined by the ratio between the angular speed of the first actuation shaft 11 and the angular speed of the driving shaft can be different from the gear ratio defined by the ratio between the angular speed of the second actuation shaft 13 and the angular speed of the driving shaft.

It is intended that the preceding description is purely exemplary and not limiting, therefore possible practical variations are intended to fall in the protective scope of the invention, as defined by the preceding description and by the following claims.

## Claims

1. Power takeoff for motor vehicles comprising a shaft (3) at an inlet (2) for receiving at least a portion of the mechanical power generated by the driving shaft of a mentioned motor vehicle and at least an outlet (4, 5) for transmitting a respective torque to actuate an actuator means, **characterized in that** it comprises: a gearwheel (8) moved by said shaft (3), the gearwheel receiving said at least one portion of said mechanical power; a first gearwheel (10) rotationally dragged by said gearwheel (8) for transmitting a first actuation torque to a first actuation shaft (11) at a first outlet (4); a second gearwheel (12) rotationally dragged by said first gearwheel (10) for transmitting a second actuation torque to a second actuation shaft (13) at a second outlet (5), the gear ratio defined by the ratio between the angular speed of said first actuation shaft (11) and the angular speed of said driving shaft and the gear ratio defined by the ratio between the angular speed of said second actuation shaft (13) and the angular speed of said driving shaft being both greater than one, so as to define said first and second outlet (4, 5) as corresponding first fast outlet (4) and second fast outlet (5).

2. Power takeoff according to claim 1, **characterized in that** said gear ratios defined by the ratio between the angular speed of said first actuation shaft (11) and the angular speed of said driving shaft and by the ratio between the angular speed of said second actuation shaft (13) and the angular speed of said driving shaft are between 1,1 and 2,1.

3. Power takeoff according to claim 1 or 2, **characterized in that** said gear ratios defined by the ratio between the angular speed of said first actuation shaft (11) and the angular speed of said driving shaft and by the ratio between the angular speed of said second actuation shaft (13) and the angular speed of said driving shaft are the same.

4. Power takeoff according to claim 1, **characterized in that** said inlet (2) is provided at a side (A) of said power takeoff (1), while said first and second outlets (4, 5) are both provided at the opposing side (P) of the same power takeoff (1).

5. Power takeoff according to claim 1, **characterized in that** it comprises a third gearwheel (14) rotationally dragged by said gearwheel (8) for transmitting a third actuation torque to a third actuation shaft (15) at a third outlet (6), the gear ratio defined by the ratio between the angular speed of said third actuation shaft (15) and the angular speed of said driving shaft tending at the most to one.

6. Power takeoff according to claim 1, **characterized in that** it comprises a third gearwheel (14) rotationally dragged by said gearwheel (8) for transmitting a third actuation torque to a third actuation shaft (15) arranged at a third outlet (6), the gear ratio defined by the angular speeds of said third actuation shaft (15) and inlet shaft (9) tending at the most to one, and **in that** said third outlet (6) is provided at a side (P) of said power takeoff (1), opposing to the side (A) in which said inlet (2) is provided.

7. Power takeoff according to claim 1, **characterized in that** said first and second gearwheel (10, 12) are respectively keyed on said first and second actuation shafts (11, 13), and **in that** at the free end facing said respective outlet (4, 5), each said actuation shaft (11, 13) is provided with: an axial threaded hole (16, 17); many grooves (18, 19) extending in circumpherential direction and of determined longitudinal extension; and, internally to said grooves (18, 19), a conical centering profile (20, 21), in order to couple the same actuation shaft (11, 13) to a said actuator means by means of a threaded, grooved and conical coupling.

8. Power takeoff according to claim 1, wherein an interface is provided for the functional connection of said first and second outlets (4, 5) to an actuator means, **characterized in that** said interface comprises: a disengaging assembly (25) which couples to said first or second actuation shaft (11, 13); and a support structure (26) which carries said disengaging assembly (25), the support structure being intended to removably couple to the casing (7) of said power takeoff (1) to stabilize the coupling of said disengaging assembly (25) to said first or second actuation shaft (11, 13).

9. Power takeoff according to claim 8, **characterized in that** said support structure (26) is intended to removably couple to the casing (7) by means of screws (27).
